# FASCICULE DE BREVET EUROPEEN

(11) **EP 1 401 672 B1**
(45) Date de publication et mention de la délivrance du brevet: **14.06.2006**
(21) Numéro de dépôt: 02774039.8
(22) Date de dépôt: 28.05.2002
(51) Int. Cl.: B60K 37/02

(54) **TABLEAU DE BORD POUR VEHICULE**
FAHRZEUGARMATURENBRETT
VEHICLE DASHBOARD

(30) Priorité: 28.05.2001 FR 0106927
(43) Date de publication de la demande: 31.03.2004
(73) Titulaire: JOHNSON CONTROLS AUTOMOTIVE ELECTRONICS, 95526 Cergy Pontoise Cédex (FR)
(72) Inventeur: FOURNIER, Joel, F-95800 Cergy Saint Christophe (FR)
(74) Mandataire: Bloch, Gérard
(86) Numéro de dépôt international: PCT/FR2002/001798
(87) Numéro de publication internationale: WO 2002/096695

(56) Documents cités:
- EP-A- 0 177 134
- WO-A-99/23624

## Description

L'invention se rapporte à un tableau de bord pour véhicule, notamment pour véhicule automobile.

Un tableau de bord comporte un certain nombre d'indicateurs : tachymètre, jauges, indicateurs kilométriques ou encore paramètres d'état du véhicule ou du moteur. Cette énumération n'est pas exhaustive.

Selon l'art antérieur, les indicateurs sont le plus souvent à aiguilles. Ils comportent des mouvements pour l'entraînement des aiguilles devant des écrans marqués avec d'autres indications sur une face avant du support. Le tout est disposé derrière une vitre de protection antireflet fixée à un coffret d'habillage, appelé rehaut.

Ce type de tableau de bord présente un certain encombrement. Pour résoudre ce problème, la Demanderesse a déjà, dans sa demande de brevet en France publiée sous le n° 2 779 682, proposé une solution pour un tableau de bord plat. Celui-ci comporte des indicateurs avec des aiguilles disposées directement contre la face avant du tableau du bord, en arrière de celle-ci. Grâce à cette disposition, on peut réaliser un tableau de bord très plat que l'on peut implanter librement dans l'habitacle. Notamment, il peut être sorti de la planche de bord.

Il existe maintenant des tableaux de bord dont les indicateurs sont des afficheurs à cristaux liquides. De tels afficheurs sont bien connus, et leur utilisation dans le domaine automobile également. Il peut s'agir d'afficheurs à points ou matriciels, de type monochrome ou couleur. Le tableau de bord est alors noyé dans la planche de bord.

La demanderesse s'est fixé comme objectif de réaliser un tableau de bord comportant au moins un afficheur à cristaux liquides et dont la structure est aussi légère que possible.

Elle s'est aussi fixée comme objectif de réaliser un tableau de bord dont la structure offre la possibilité de créer de nouvelles formes esthétiques.

Par le document EP A 177 134, on connaît un tableau de bord pour véhicule, comportant au moins un afficheur à cristaux liquides du type transparent positif, sa face arrière, par rapport à la position du conducteur, étant éclairée par la lumière du jour. Mais, avec ce tableau de bord, la nuit, une lampe UV est allumée à proximité de l'afficheur dont une des parois est sensible à la lumière UV. Pendant la nuit, l'écran est lumineux, les chiffres devenant visibles par opacité.

La demanderesse a cherché à encore simplifier un tel tableau de bord. Elle y est parvenue avec un tableau de bord selon la revendication 1.

Conformément à un mode de réalisation préféré, le tableau de bord est monté en saillie par rapport à la planche de bord, et de telle manière que sa face arrière par rapport au conducteur soit éclairée par la lumière ambiante. En particulier, la face arrière est éclairée par la lumière venant du pare-brise. Ce type d'afficheur, grâce à sa finesse et à sa transparence, permet de réaliser un tableau de bord particulièrement léger, peu envahissant visuellement, offrant un cadre approprié à la création de formes esthétiques.

Conformément à une autre caractéristique, on associe le dispositif afficheur à un guide de lumière permettant de rendre les indicateurs visibles la nuit ou quand la lumière ambiante, notamment extérieure, est insuffisante. Ce guide de lumière a de préférence la forme d'une plaque en matière plastique transparente, telle que le PMMA, abréviation pour PolyMéthacrylate de Méthyle Awcrylonitrile. On place alors la plaque contre la face arrière du dispositif d'affichage dont le cadre lui sert également de support. Une partie de sa face arrière est incurvée vers l'afficheur de telle manière que la lumière émise par une source de lumière extérieure, et disposée latéralement, par rapport à l'afficheur soit réfléchie au moins partiellement dans sa direction. Cette partie incurvée est de préférence recouverte d'un moyen réfléchissant. Ce dernier est choisi de façon à ne pas former écran à la lumière qui provient de l'arrière de la plaque. Avantageusement, on utilise un marquage blanc, translucide.

D'autres caractéristiques apparaîtront à la lecture de la description qui suit, d'un mode de réalisation de l'invention, en regard des dessins annexés sur lesquels,
- La figure 1 est une vue de face du tableau de bord conforme à l'invention,
- La figure 2 est une vue en coupe selon la direction AA du tableau de bord de la figure 1.

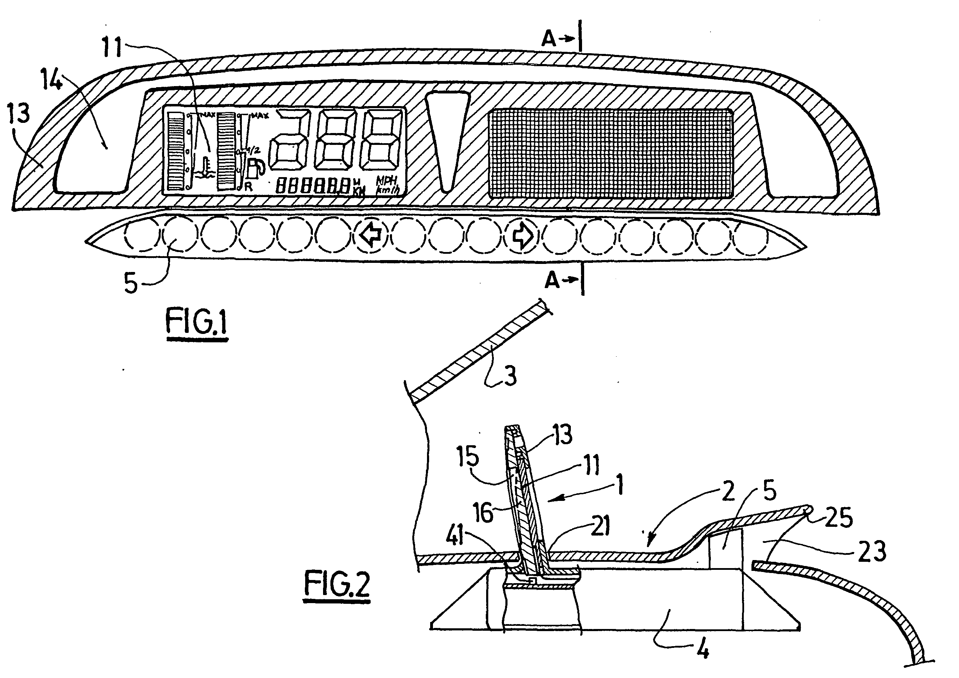

On a représenté sur la figure 2, de manière schématique et en coupe partielle, le tableau de bord (1), le contour de la planche de bord (2) sur laquelle il est monté, et une partie du pare-brise (3) du véhicule. Le volant est sur la droite par rapport à la figure ; il n'est pas représenté. Le tableau de bord (1) est une pièce mince, ici plate, qui émerge d'une ouverture (21) ménagée dans la planche de bord (2). Dans ce mode de réalisation, le tableau de bord est solidaire d'un boîtier (4) qui est logé à l'intérieur de la planche de bord et qui comporte les moyens de commande du tableau de bord, en particulier. Sur la partie droite du boîtier par rapport à la figure, on a disposé des voyants lumineux (5), clignotants par exemple, qui ne sont pas aptes à être affichés sur le moyen d'affichage à cristaux liquides. Le conducteur perçoit les voyants au travers d'une ouverture (23). Celle-ci est surmontée d'une bavette (25) de protection contre toute lumière parasite.

Le tableau de bord comprend un cadre (13) avec un premier logement pour un dispositif d'affichage à cristaux liquides (11). Le cadre est fabriqué, par exemple, dans un matériau plastique dont la face vue de côté conducteur est de préférence noire et grainée. Le cadre est disposé en saillie par rapport à la planche de bord, c'est à dire qu'il fait un angle significatif avec cette dernière. Le dispositif (11) est visible au travers d'ouvertures convenables, ménagées dans le cadre (13).

Le dispositif (11) est du type à affichage par cristaux liquides, connu en soi. Il comprend diverses zones d'information. Par exemple, comme on peut le voir sur la figure 1 et la partie gauche du tableau de bord, il peut s'agir du tachymètre, du compteur kilométrique, de la jauge d'essence et de la température de l'eau du radiateur.

Il est du type transparent positif. Pour que les informations apparaissant dans les zones indiquées soient visibles avec un contraste suffisant, on s'assure que sa face arrière, celle qui est à l'opposé du conducteur, est suffisamment éclairée. La face arrière reçoit la lumière extérieure directement du pare-brise (3) du véhicule. Pour cela, elle doit donc être suffisamment dégagée de la planche de bord.

Le tableau de bord comporte une plaque (15), formant support de l'afficheur (11), qui s'appuie contre la face arrière de ce dernier, et est fixée au cadre (13), dans un second logement. Le matériau plastique de la plaque est translucide. Il s'agit de préférence de PMMA mais toute autre matière assurant une transmission satisfaisante de la lumière vers la face arrière de l'afficheur convient également.

Dans ce mode de réalisation le support (15) est plat. Il remplit aussi la fonction de guide de lumière provenant d'une autre source que la lumière ambiante. Il comporte à cet effet, sur sa face extérieure, une portion de surface incurvée (16) en direction des zones d'information du dispositif d'affichage (11), et traitée de manière à réfléchir la lumière. Dans le mode de réalisation représenté, on a creusé la plaque (15), sur sa partie qui est en regard des zones d'information de l'afficheur. Le fond de la partie en creux a la forme incurvée convexe souhaitée. Une source de lumière (41) est placée à la base de la plaque (15) dans le boîtier (4). Une diode LED convient pour cet usage. Lorsque la diode est sous tension, elle éclaire la portion de surface (16) au travers de la plaque. La lumière est ainsi réfléchie en partie vers l'afficheur. Afin d'améliorer la diffusion de lumière, on prévoit un marquage blanc diffusant. Tout autre traitement équivalent convient dans la mesure bien sûr où il ne forme pas un masque pour la lumière issue du pare-brise. On prévoit aussi un marquage noir (17) sur les zones qui ne sont pas en regard de l'afficheur afin d'éviter les éclairages parasites.

Le tableau de bord fonctionne de la façon suivante. Pendant le jour, la lumière issue du pare-brise suffit à l'éclairage de l'afficheur. Quand la lumière extérieure faiblit, le conducteur actionne la commande d'éclairage du tableau de bord et la lumière émise par la diode LED prend le relais.

## Revendications

1. Tableau de bord (1) pour véhicule, comportant au moins un afficheur à cristaux liquides (11), du type transparent positif, sa face arrière, par rapport à la position du conducteur, étant éclairée par la lumière du jour, **caractérisé par le fait que**, ledit afficheur (11) comportant des zones d'information et des zones neutres, il est adossé à un support (15) transparent sur les zones d'information.

2. Tableau de bord (1) selon la revendication 1, **caractérisé par le fait qu'**il est monté sur la planche de bord (2) en saillie par rapport à celle-ci, ladite face arrière étant éclairée par la lumière provenant du pare-brise du véhicule.

3. Tableau de bord (1) selon l'une des revendications 1 et 2, **caractérisé par le fait qu'**il comporte un moyen d'éclairage de l'afficheur (11) pour la nuit.

4. Tableau de bord (1) selon la revendication 3, **caractérisé par le fait que** ledit moyen d'éclairage comprend ledit support transparent (15) servant de guide de lumière.

5. Tableau de bord (1) selon la revendication 4, **caractérisé par le fait que** ledit moyen d'éclairage comprend en outre une source de lumière (41) placée à l'extérieur dudit tableau de bord (1) latéralement par rapport audit afficheur (11).

6. Tableau de bord (1) selon l'une des revendications 1 à 5, **caractérisé par le fait que** le support transparent (15) comporte sur sa face opposée à l'afficheur, un moyen (16) assurant la réflexion de la lumière provenant de ladite source de lumière (41).

7. Tableau de bord (1) selon la revendication 6, **caractérisé par le fait que** le support transparent (15) comporte un portion de surface (16) incurvée vers l'afficheur (11).

8. Tableau de bord (1) selon la revendication 7, **caractérisé par le fait que** la portion de surface (16) est traitée avec un moyen réfléchissant.

9. Tableau de bord (1) selon la revendication 8, **caractérisé par le fait que** la portion de surface de la face arrière du support transparent qui n'est pas en regard des zones d'information de l'afficheur est traité en noir.

10. Tableau de bord (1) selon l'une des revendications 1 à 9, **caractérisé par le fait que** l'afficheur (11) est monté dans un cadre (13) dont la surface en vue du conducteur est de couleur sombre.

## Claims

1. Instrument panel (1) for a vehicle, comprising at least one liquid crystal display (11), of the positive transparent type, its rear face, with respect to the driver's position, being illuminated by daylight, **characterized in that**, with said display (11) comprising information zones and neutral zones, it is backed up against a transparent support (15) on the information zones.

2. Instrument panel (1) according to Claim 1, **characterized in that** it is mounted on the dashboard (2) projecting therefrom, said rear face being illuminated by the light from the windshield of the vehicle.

3. Instrument panel (1) according to either of Claims 1 and 2, **characterized in that** it comprises a means for illuminating the display (11) by night.

4. Instrument panel (1) according to Claim 3, **characterized in that** said illuminating means comprises said transparent support (15) that acts as a light guide.

5. Instrument panel (1) according to Claim 4, **characterized in that** said illuminating means further comprises a light source (41) placed outside said instrument panel (1) laterally with respect to said display (11).

6. Instrument panel (1) according to one of Claims 1 to 5, **characterized in that** the transparent support (15) comprises, on its opposite face to the display, a means (15) for reflecting the light originating from said light source (41).

7. Instrument panel (1) according to Claim 6, **characterized in that** the transparent support (15) comprises a surface portion (16) curved towards the display (11).

8. Instrument panel (1) according to Claim 7, **characterized in that** the surface portion (16) is treated with a reflective means.

9. Instrument panel (1) according to Claim 8, **characterized in that** the surface portion of the rear face of the transparent support that does not face the information zones of the display is treated with black.

10. Instrument panel (1) according to one of Claims 1 to 9, **characterized in that** the display (11) is mounted in a surround (13) of which the surface in the driver's sight is of a dark colour.

## Patentansprüche

1. Fahrzeuginstrumententafel (1) mit mindestens einer Flüssigkristall-Anzeige (11) vom Typ transparent-positiv, wobei ihre Rückseite zum Fahrer hin vom Tageslicht beleuchtet wird, **dadurch gekennzeichnet, dass** die Anzeige (11) Informationsbereiche und neutrale Bereiche aufweist und an einem transparenten Halter (15) auf den Informationsbereichen abgestützt ist.

2. Fahrzeuginstrumententafel (1) nach Anspruch 1, **dadurch gekennzeichnet, dass** sie so im Armaturenbrett (2) angebracht ist, dass sie darüber hinausragt, wobei die Rückseite vom Tageslicht der Windschutzscheibe beleuchtet wird.

3. Fahrzeuginstrumententafel (1) nach Anspruch 1 und 2, **dadurch gekennzeichnet, dass** sie ein Anzeigebeleuchtungsmittel (11) für nachts aufweist.

4. Fahrzeuginstrumententafel (1) nach Anspruch 3, **dadurch gekennzeichnet, dass** das Beleuchtungsmittel den transparenten, als Lichtleiter dienenden Halter (15) umfasst.

5. Fahrzeuginstrumententafel (1) nach Anspruch 4, **dadurch gekennzeichnet, dass** das Beleuchtungsmittel zudem eine außen an der Instrumententafel (1) seitlich zur Anzeige (11) angeordnete Lichtquelle (41) umfasst.

6. Fahrzeuginstrumententafel (1) nach einem der Ansprüche 1 bis 5, **dadurch gekennzeichnet, dass** der transparente Halter (15) auf seiner von der Anzeige abgewandten Seite ein Mittel (16) zur Reflexion des von der Lichtquelle (41) kommenden Lichtes aufweist.

7. Fahrzeuginstrumententafel (1) nach Anspruch 6, **dadurch gekennzeichnet, dass** der durchsichtige Halter (15) einen zur Anzeige (11) hin gekrümmten Oberflächenabschnitt (16) aufweist.

8. Fahrzeuginstrumententafel (1) nach Anspruch 7, **dadurch gekennzeichnet, dass** der Oberflächenabschnitt mit einem reflektierenden Mittel behandelt ist.

9. Fahrzeuginstrumententafel (1) nach Anspruch 8, **dadurch gekennzeichnet, dass** der den Informationsbereichen nicht zugewandte Oberflächenabschnitt der Rückseite des transparenten Trägers schwarz behandelt ist.

10. Fahrzeuginstrumententafel (1) nach einem der Ansprüche 1 bis 9, **dadurch gekennzeichnet, dass** die Anzeige (11) in einen Rahmen (13) montiert ist, dessen zum Fahrer zeigende Oberfläche dunkelfarbig ist.
